(19) **Europäisches Patentamt European Patent Office Office européen des brevets**

(11) **EP 3 537 289 B1**

(12) **EUROPEAN PATENT SPECIFICATION**

(45) Date of publication and mention of the grant of the patent:
**21.04.2021 Bulletin 2021/16**

(51) Int Cl.:
*G06F 9/345* (2018.01)     *G06F 9/38* (2018.01)
*G06F 9/30* (2018.01)

(21) Application number: **19168928.0**

(22) Date of filing: **10.03.2008**

(54) **ENHANCED LOOK-UP TABLE SIGNAL PROCESSING**

VERBESSERTE NACHSCHLAGETABELLENSIGNALVERARBEITUNG

TRAITEMENT AMÉLIORÉ DE SIGNAL DE TABLEAU DE RECHERCHE

(84) Designated Contracting States:
**DE FR GB**

(43) Date of publication of application:
**11.09.2019 Bulletin 2019/37**

(62) Document number(s) of the earlier application(s) in accordance with Art. 76 EPC:
**16170207.1 / 3 153 965**
**08152533.9 / 2 101 258**

(73) Proprietor: **Mobileye Vision Technologies Ltd. Jerusalem 9777513 (IL)**

(72) Inventors:
• **NAVON, Mois**
  **Efrat (IL)**
• **SIXOU, Emmanuel**
  **Jerusalem (IL)**
• **KREININ, Yossi**
  **Jerusalem (IL)**
• **SAJMAN, Roman**
  **Givat Zeev (IL)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**WO-A2-2005/017765     US-A1- 2003 046 559**
**US-B1- 6 446 198**

## Description

FIELD AND BACKGROUND OF THE INVENTION

The present invention relates to signal processors and, more particularly, to a device which includes an enhanced look-up table for use in digital signal processing. Specifically, the device includes features appropriate for efficient image processing.

Digital signal processing (DSP) includes analysis and processing of signals in a digital representation. DSP incudes audio and speech signal processing, sonar and radar signal processing, sensor array processing; spectral estimation, statistical signal processing, image processing, signal processing for communications, biomedical signal processing, seismic data processing, etc.

Since the goal of DSP is usually to measure or filter continuous real-world analog signals, the first step is usually to convert the signal from an analog to a digital form, by using an analog to digital converter. If the required output signal is another analog output signal, then a digital to analog converter is required at the output.

Algorithms required for DSP are sometimes performed using specialized microprocessors called digital signal processors. Digital signal processors process signals in real time and are generally designed as application-specific integrated circuits (ASICs). When flexibility and rapid development are more important than unit costs at high volume, DSP algorithms may also be implemented using field-programmable gate arrays (FPGAs). (from http://en.wikipedia.org/wiki/Digital_signal_processing)

In computer science, a lookup table in digital processing is an array of registers or memory buffer which allows specific access, i.e. read and write commands based on previously known addresses of the registers and/or memory elements. A lookup table is for example, an associative array used to replace a runtime computation with a simpler lookup operation. Through use of a lookup table, rather than performing the computation each time an entry is accessed, a speed gain can be significant, since retrieving a value from memory is often faster than undergoing a time consuming computation.

A classic example is a trigonometry calculation i.e. calculating the sine of an angle. To avoid unnecessary calculations, a number of sine values are pre-calculated, for example for each whole number of degrees. Later, when the program requires the sine of an angle, the lookup table is used to retrieve the sine of a nearby angle from a memory address instead of calculating it using the mathematical formula.

Before the advent of computers, similar tables were used by people to speed up hand calculations. Particularly prevalent were tables of values for trigonometry, logarithms, and statistical density functions.

In image processing, lookup tables (LUT) are often used to provide an output value for a range of index values. One common LUT is a colormap or palette used to determine colors and intensity values with which a particular image is displayed. (from http://en.wikipedia.org/wiki/Look-up_table)

In statistics, a histogram is a data structure or table in which frequency of occurrence of data is tabulated. The possible data values are divided into several categories or bins and the frequency of occurrence is tabulated for each bin. A histogram is often represented graphically as a bar graph. In image processing, image data is typically tabulated in a histogram based on frequency of occurrence in bins of gray scale or color information.

The symbol "x" is used to denote hexadecimal notation as in "xFF".

The terms "location", "index" and "address" are used herein interchangeably.

US patent 6446198 illustrates a lookup operation that is carried out on a data table by logically dividing the data table into a number of smaller sets of data that can be indexed with a single byte of data. Each set of data consists of two vectors, which constitute the operands for a permute instruction. Only a limited number of bits are required to index into the table during the execution of this instruction. The remaining bits of each index are used as masks into a series of select instructions. The select instruction chooses between two vector components, based on the mask, and places the selected components into a new vector. The mask is generated by shifting one of the higher order bits of the index to the most significant position, and then propagating that bit throughout a byte, for example by means of an arithmetic shift. This procedure is carried out for all of the index bytes in the vector, to generate a select mask. The select mask is then used during a select operation, to choose between the results of permute instructions on different ones of the logically divided sets of data. Multi-byte table entries are retrieved by replicating each index value and adding consecutive values to form multiple consecutive index values that are then used in multiple permute operations.

WO 2005/017765 A2 describes a parallel processing array, the processing elements of which each comprise an arithmetic logic unit, a multiplexer, an accumulator and a flag register. The arithmetic logic unit is configured to operate on a common instruction received by all processing elements in the processing array. Each processing element of the array further comprises a storage element, which supports local customized processing, such as lookup table operations and storing local coefficient data.

US 2003/0046559 A1 describes a computer system with a dedicated memory for storing computationally intensive operations, such as utilized by encryption or channel code operations. The processor of the system includes a multiple-data operation set. The multiple-data operation set enables loading of data within a destination register that is randomly distributed within storage areas of the dedicated memory. An application utilizing or requiring the results of such operations will load the desired results within the destination register.

## SUMMARY OF THE INVENTION

According to the present invention, an electronic look-up device according to claim 1 is provided. Specific embodiments are defined in the dependent claims.

According to embodiments, the present invention comprises an electronic device implemented on a semiconductor chip including an array of addressable registers storing data. An input register connected to the array stores an input command parameter (e.g. an opcode of a command) and its associated operands in one or more input registers connected to the addressable register array via logic circuitry. The operands may include either data or address operands typically referencing at least one register of the array. Based on the input command parameter, processing circuitry processes the data stored in the addressable registers. A single instance of a command accesses the at least one register of the array. Based on the input command parameter, the command for all of the address operands: reads a datum of the data previously stored in at least one register, updates the datum thereby producing an updated datum, and writes the updated datum into at least one register. The command has multiple address operands referencing the one or more registers and supports two or more of the address operands being identical. The device preferably includes logic circuitry operatively attached between the input register and the processing circuitry, where the logic circuitry provides a logical output signal to the processing circuitry indicating which, if any, of the address operands are identical. The processing circuitry based on the logical output, processes first any identical address operands prior to writing the updated datum into the at least one register. The electronic device preferably includes a clock which provides multiple clock pulses. While the processing circuitry processes the command during at least three clock pulses, a new instance of the command begins processing by the processing circuitry on a consecutive clock pulse so that there is preferably a command throughput of one command per clock pulse. The command preferably either sets a bin of a histogram or increments a bin of a histogram by an incremental value based on the operands in the input registers. The command optionally compares the datum with the incremental values corresponding to a given bin, calculates the minimal value from amongst the datum and the incremental value(s) and writes as the updated datum the minimal value as said updated datum. The command optionally calculates the maximal value from amongst the datum or the incremental values corresponding to a given bin and writes as the updated datum the maximal value of the datum and the incremental value(s).

When the operand input registers contain address operands, they reference a portion of the addressable storage array. When the portion is contiguous, the size of the contiguous portion is preferably specified by a size value stored in an input control register connected to the array. The command preferably accesses solely the contiguous portion of the array of addressable registers. An input control register is connected to the array (via the logic circuitry) and stores a door-knock value. According to a feature of the present invention, upon initiating the command, the door-knock value is decremented and only when the door-knock value equals a previously defined minimum value (typically zero) is the updated datum written into the at least one register.

The present invention also provides an electronic device which includes a first array of addressable registers or locations. Various input registers connected to the array (via the logic circuitry), store an input command parameter, operands and a size value. This second array of input registers is connected to the first array. The input registers of the second array store a plurality of address operands referencing a plurality of locations of the first array. The accessible area of said addressable registers is specified by the size value. The address operands as stored respectively in the second array are calculated by the input command parameter and modulo the size value. Upon processing a command based on said input command parameter, processing circuitry processes data stored in the locations indicated by the address operands. A single instance of the command accesses at least one register of the accessible area such that the processing circuitry for all the address commands: reads a datum of the data previously stored in the at least one register, updates the datum thereby producing an updated datum, and writes the updated datum into the at least one register. The single instance of the command referencing the at least one register of the array supports at least two of the address operands being identical. A clock provides multiple clock pulses. The processing circuitry processes the command during three clock pulses, however a new command can be accepted on every clock cycle so that there is preferably a command throughput of one command per clock pulse.

The present invention also provides an electronic device implemented on a semiconductor chip including an array of addressable registers. Input registers connected to the array store an input command parameter specifying a command and its operands. A single instance of the input command accesses the at least one register of the array. The command is executed by processing circuitry which processes the command for all its address operands referencing at least one of the addressable registers of the array. Based on the input command parameter, the command writes a datum into the at least one addressable register. A clock attached to the processing circuitry provides clock pulses. The command throughput in number of commands processed per clock pulse is independent of the number of the address operands. The command throughput is preferably one command per clock pulse. An input control register is preferably connected to the logic circuitry storing a door-knock value and upon receiving the command, the door-knock value is decremented so that only when the door-knock value equals a previously defined minimum value, *e.g.* 0, is the datum written into the at least one register.

BRIEF DESCRIPTION OF THE DRAWINGS

The invention is herein described, by way of example only, with reference to the accompanying drawings, wherein:

FIG. 1 is a simplified diagram of a device, according to an embodiment of the present invention;
FIG. 2A-C illustrates a simplified timing diagrams of histogram and other commands initiated on consecutive clock pulses, according to embodiments of the present invention;
FIG. 3 and FIG. 4 illustrate a simplified block diagram of a processing circuit, according to an embodiment of the present invention.

DESCRIPTION OF THE PREFERRED EMBODIMENTS

The present invention includes one or more features of an enhanced look-sup table integrated into a hardware device. The device may be implemented as part of an image processor designed to provide a command set for efficient image processing.

By way of introduction, the enhanced look-up table device, according to different embodiments of the present invention includes several innovative features. While a prior art look-up table may include registers which allow for register specific read and write accesses, an enhanced look-up table, according to the present invention, supports commands to manipulate the data stored in the enhanced look up table in a read-modify-write sequence. An example of a read-modify-write sequence is incrementing bins of a histogram.

Furthermore, whereas a standard LUT might support "vectored" accesses (i.e. one command accesses several consecutive locations), an enhanced look-up table, according to embodiments of the present invention, supports random vectored access i.e., one command can initiate and successfully access several non-consecutive address locations.

Moreover, in an enhanced look up table, according to embodiments of the present invention which maintains a throughput of one command per single clock cycle, random access to redundant or non-unique locations is supported. A single command which accesses different address locations may include a number of redundant locations. For example, a single command performs respective increment operations, (e.g. increment bins of a histogram) to four address locations, e.g. 10, 2, 35, 2 such that address location 2 must be incremented twice by the same command. The command is preferably pre-processed to detect if the same address location appears in the command and if the incremental input values are added together so that address location, e.g. 2 of look table is incremented once and not twice thereby improving efficiency.

Another useful feature according to embodiments of the present invention is a programmable "delay" register which allows a "door-knock" value to be set indicating the number of commands attempting to access a given address before the address is actually accessed. The delay feature is analogous to knocking on a door. The door opens only after a previously defined "door-knock count" is reached. The term "door-knock" value is used herein to refer to the value of one of the delay control registers.

The principles and operation of an enhanced look-up table, according to the present invention, may be better understood with reference to the drawings and the accompanying description.

By way of introduction, it should be noted, that although the discussion herein relates to image processing, the present invention may, by non-limiting example, alternatively be configured as well using other information and/or signal processing originating as analog and/or digital signals including statistical signal processing, audio signal processing, speech signal processing and array processing from arrays of sensors.

Before explaining embodiments of the invention in detail, it is to be understood that the invention is not limited in its application to the details of design and the arrangement of the components set forth in the following description or illustrated in the drawings. The invention is capable of other embodiments or of being practiced or carried out in various ways. Also, it is to be understood that the phraseology and terminology employed herein is for the purpose of description and should not be regarded as limiting.

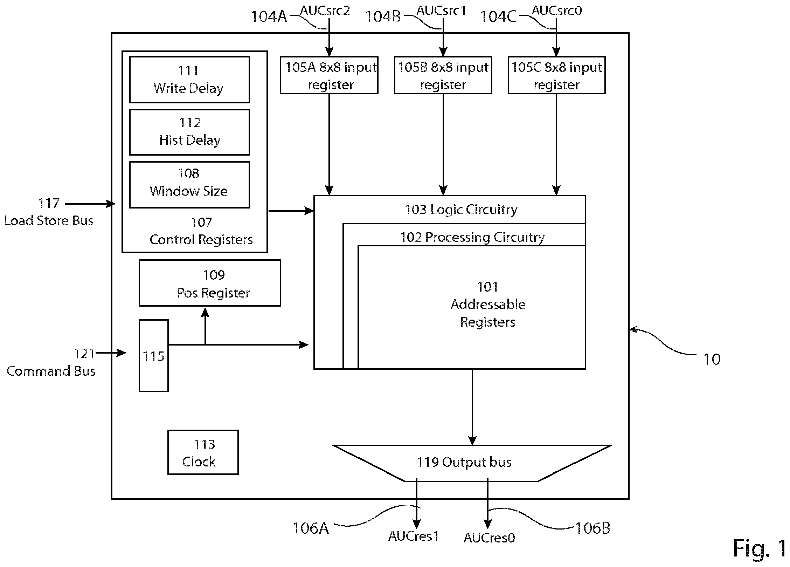

Referring now to the drawings, Figure 1 illustrates a simplified diagram of a device 10 preferably constructed in an ASIC, FPGA or discrete logic on a PCB, or other known methods in the art of electronics. At the core of device 10 is an array 101 of addressable registers or look-up table (LUT) 101 and associated processing circuitry 102 which processes commands accessing array 101.

An exemplary LUT 101 is a 256 byte register array accessible in odd and even banks. This configuration allows for four odd/even pairs of bytes to be written simultaneously and for eight separate locations to be read simultaneously.

Command input parameters and/or operands are optionally pre-processed by logic circuitry 103. Device 10 further includes three data bus inputs 104A, 104B and 104C of 64 bits, each including for instance 8 input registers of 8 bits each 105A, 105B, 105C (respectively), and similarly two output busses 106A,B of 64 bits (8 registers of 8 bits) from output multiplexer 119.

A memory mapped load/store bus 117 loads configuration or control registers 107. Configuration Registers 107 which contain preferably 16 bit registers are used to control various command operations. Configuration registers 107 as memory mapped locations on load/store bus 117 are preferably accessed via standard memory commands. Configuration registers 107 can preferably be accessed individually or as a 64 bit word, Configuration registers include window size register 108 and delay control registers: write delay register 111 and histogram delay register 112 used for controlling respective "door-knock" delays prior to executing commands.

A command bus 121 (e.g. of 9 bits) indicates the specific command which is latched in a command register 115. Some commands optionally use a register array 109 previously loaded with address locations referencing addresses of array 101. A clock 113 provides clock pulses to parts of device 10 duration operation.

Input registers 105, data feeding output multiplexer 119, position register 109, control registers 107 and command register 115 are preferably latched so that until new values are latched in the respective registers the previously stored values are maintained.

*Operation of Device 10*

Look-up table 101 is preferably implemented by a multi-port register file able to perform multiple, e.g. 8, reads and writes per cycle of clock 113. Data input to LUT 101 is typically achieved by latching data busses 104 and command bus 121. The outputs from LUT 101 are driven upon any command that changes a specific output bus (i.e., 106A AUCRes0 and/or 106B AUCRes1). Device 10 preferably has a command throughput of 1 clock cycle, such that upon every new clock cycle the incoming command input 115 on the command bus 121 is executed. The device processes commands in a 3 cycle pipeline, such that every command processed has its result available on the output bus 106 after 3 cycles. If there are no commands to execute, the software drives, for instance, NOP commands.

Device 10 preferably handles different command types including: LUT read/write, Histogram, Sliding Window and Miscellaneous. The following table summarizes various command operations, according to different embodiments of the present invention. Notation: u=unsigned, s=signed, b=byte (8 bits), h= halfword (16 bits), rw= read/write

*Table 1: Commands*

| Command Type | Command name |
|---|---|
| LUT readiwrite | |
| | lutread 8ub 8b |
| | lutread 4ub 4h 0 |
| | lutread 4ub 4h 1 |
| | lutwrite 1 ub Bb |
| | lutrw Sub 1 ub 8b 8b |
| Histogram | |
| | hist 4ub 4ub |
| | histh 4sub 4ub 0 |
| | histh 4ub 4ub 1 |
| | histbmin 4ub 4ub |
| | histbmax 4ub 4ub |
| | histbset 4ub 4ub |
| Sliding Window | |
| | lutreadinc Bsb 8b |
| | lutreadposld 8ub 8b |
| | lutrwinc 8sb 1 ub 8b 8b |

(continued)

| Sliding Window | |
|---|---|
| | lutrwposld 8ub1 ub 8b 8b |
| | lutposld 8ub |
| Misc | |
| | reset |
| | nop |

*Enhanced LUT Commands: Read, Write, ReadWrite*

LUT 101 read, write and read/write commands provide for various vectored accesses to device 10. The read and/or write commands are optionally configured for random addressing to non-consecutive addresses.

Upon command lutread_8ub_8b, eight separate bytes are read typically from eight unique locations indicated by eight separate unsigned bytes which are used as indices to the LUT.

Command lutread_8ub_8b pseudo-code is:

```
AUCres0[07:00] = LUT(AUCsrc0[07:00])
AUCres0[15:08] = LUT(AUCsrc0[15:08])
AUCres0[23:16] = LUT(AUCsrc0[23:16])
AUCresO[31:24] = LUT(AUCsrc0[31:24])
AUCres0[39:32] = LUT(AUCsrc0[39:32])
AUCres0[47:40] = LUT(AUCsrc0[47:40])
AUCres0[55:48] = LUT(AUCsrc0[55:48])
AUCres0[63:56] = LUT(AUCsrc0[63:56])
```

Upon command lutread_4ub_4h four separate half words, are read from typically four unique locations indicated by four separate unsigned bytes which are used as indices to LUT 101 . An opcode extension bit optionally indicates whether the 7 bit index to the 128 half words comes from the 7 least significant bits 1sbs (ext=0), or the 7 most significant bits (ext=1).

Pseudo code for command lutread_4ub_4h is:

for ext=0:

```
AUCres0[15:00]= {LUT(AUCsrc0[06:00],b1),LUT(AUCsrc0[06:00],b0)}
AUCres0[31:16]= {LUT(AUCsrc0[14:08],b1),LUT(AUCsrc0[14:08],b0)}
AUCres0[47:32]= {LUT(AUCsrc0[22:16],b1),LUT(AUCsrc0[22:16],b0)}
AUCres0[63:48]= {LUT(AUCsrc0[30:24],b1),LUT(AUCsrc0[30:24],b0)}
```

for ext=1:

```
AUCres0[15:00]= {LUT(AUCsrc0[07:01],b1),LUT(AUCsrc0[07:01],b0)}
AUCres0[31:16]= {LUT(AUCsrc0[15:09],b1),LUT(AUCsrc0[15:09],b0)}
AUCres0[47:32]= {LUT(AUCsrc0[23:17],b1),LUT(AUCsrc0[23:17],b0)}
AUCres0[63:48]= {LUT(AUCsrc0[31:25],b1),LUT(AUCsrc0[31:25],b0)}
```

Upon command lutwrite_lub_8b eight separate bytes, are written to eight consecutive bytes located by one unsigned byte which is used as an index to LUT 101. The index is eight byte aligned, and thus processing circuitry 102 zeros the 3 least significant bits.

Pseudo code for command lutwrite_lub_8b is:

```
LUT(AUCsrc1[07:03],000) = AUCsrc2[07:00]
LUT(AUCsrc1[07:03],001) = AUCsrc2[15:08]
LUT(AUCsrcl[07:03],010) = AUCsrc2[23:16]
LUT(AUCsrc1[07:03],011) = AUCsrc2[31:24]
```

```
LUT(AUCsrc1[07:03],100) = AUCsrc2[39:32]
LUT(AUCsrc1[07:03],101) = AUCsrc2[47:40]
LUT(AUCsrc1[07:03],110) = AUCsrc2[55:48]
LUT(AUCsrc1[07:03],111) = AUCsrc2[63:56]
```

Command lutrw_8ub_1ub_8b_8b is a combination of the lutwrite and lutread commands. Eight separate bytes are read from eight unique locations indicated by eight separate unsigned bytes which are used as indices to LUT 101.

Pseudo code for command lutrw_8ub_1ub_8b_8b is:

```
AUCres0[07:00] = LUT(AUCsrc0[07:00])
AUCres0[15:08] = LUT(AUCsrc0[15:08])
AUCresO[23:16] = LUT(AUCsrc0[23:16])
AUCres0[31:24] = LUT(AUCsrc0[31:24])
AUCres0[39:32] = LUT(AUCsrc0[39:32])
AUCres0[47:40] = LUT(AUCsrc0[47:401)
AUCres0[55:48] = LUT(AUCsrc0[55:48])
AUCres0[63:56] = LUT(AUCsrc0[63:56])
LUT(AUCsrc1[07:03],000) = AUCsrc2[07:00]
LUT(AUCsrc1[07:03],001) = AUCsrc2[15:08]
LUT(AUCsrc1[07:03],010) = AUCsrc2[23:16]
LUT(AUCsrc1[07:03],011) = AUCsrc2[31:24]
LUT(AUCsrc1[07:03],100) = AUCsrc2[39:32]
LUT(AUCsrcl[07:03],101) = AUCsrc2[47:40]
LUT(AUCsrc1[07:03],110 = AUCsrc2[55:48]
LUT(AUCsrc1[07:03],111) = AUCsrc2[63:56]
```

Eight separate bytes are written to eight typically consecutive bytes located by one unsigned byte which is used as an index to LUT 101. The index is eight byte-aligned, and thus processing circuitry 102 zeros the three least significant bits.

Commands lutwrite_1ub_8b and lutrw_8ub_1ub_8b_8b are optionally performed in conjunction with "write delay" control register 111 which contains a door-knock value to be decremented upon receiving a write type command. The actual write indicated in the command is executed when the delay register door-knock value is a previously determined minimal value, typically zero. A decrement on the register is not performed following a successful write of the data.

*Histogram Commands*

Histogram commands provide for various histogram manipulations. Each histogram command provides for multiple, e.g. four, bins to be updated simultaneously. According to the present invention, the four bin locations are not necessarily unique, and as such, a histogram command may actually request updating one and the same bin with four different values. To support this eventuality, the logic circuitry 103 compares bin address operands and performs the requested operation accounting for all corresponding address operands even with redundant bins.

Furthermore, histogram commands are performed in conjunction with Control Register 112 "hist delay" which contains a door-knock value to be decremented upon receiving a histogram command. The actual histogram update requested by the command is executed when the value stored in hist delay register 112 is zero. No decrement on register 112 is performed following a successful histogram update. Typically, histogram commands include read and then write cause a decrement of the door-knock value only following the write phase of the command.

Histogram commands typically require three clock cycles to execute. During the first clock cycle current bin value is read (histrd) and during the second clock cycle to the updated bin value is calculated (histdatcalc) and during the third cycle the updated bin value is written back (histwr) into the same address. According to an embodiment of the present invention during operation of device 10, a throughput of one cycle is preferably maintained, i.e. a new command is accepted every cycle. In the event that the software performs an illegal sequence of commands, the illegal commands are ignored (converted internally to reset commands) and the original histogram commands will complete normally.

Exemplary histogram commands are described as follows, according to different embodiments of the present invention:

In command histb_4ub_4ub four separate unsigned bytes, specify four indices to LUT 101 organized as 256 bytes which are to be incremented by four corresponding values indicated by four separate unsigned bytes. In the case that the new value to be written is greater than xFF, the new value is saturated to xFF.

Pseudo-code for command histb_4ub_4ub is::

$$LUT(AUCsrc0[07:00]) = LUT(AUCsrc0[07:00]) + AUCsrc2[07:00]$$

$$LUT(AUCsrc0[15:08]) = LUT(AUCsrc0[15:08]) + AUCsrc2[15:08]$$

$$LUT(AUCsrc0[23:16]) = LUT(AUCsrc0[23:16]) + AUCsrc2[23:16]$$

$$LUT(AUCsrc0[31:24]) = LUT(AUCsrc0[31:24]) + AUCsrc2[31:24]$$

In command histh_4ub_4ub four separate unsigned bytes, specify four indices to LUT 101 organized as 128 half words which are to be incremented by four corresponding values indicated by four separate unsigned bytes. In the case that the new value to be written is greater than xFFFF, the new value is saturated to xFFFF.

The opcode extension bit preferably indicates whether the 7 bit index comes from the 7 least significant bits (ext=0), or the 7 most significant bits. (ext=1).

Pseudo code for command histh_4ub_4ub is:

$$LUTbin0 = LUTbin0 + AUCsrc2[07:00]$$

$$LUTbin1 = LUTbin1 + AUCsrc2[15:08]$$

$$LUTbin2 = LUTbin2 + AUCsrc2[23:16]$$

$$LUTbin3 = LUTbin3 + AUCsrc2[31:24]$$

In the case that more than one index points to the same bin, the bin will be incremented with the sum of all the increment values.

Where, for ext=0
LUTbin0 = {LUT(AUCsrc0[06:00],b1),LUT(AUCsrc0[06:00],b0)}
LUTbin1 = {LUT(AUCsrc0[14:08],b1),LUT(AUCsrc0[14:08,b0)}
LUTbin2 = {LUT(AUCsrc0[22:16],b1),LUT(AUCsrc0[22:16],b0)}
LUTbin3 = {LUT(AUCsrc0[30:24],b1),LUT(AUCsrc0[30:24],b0)}

Where, for ext=1
LUTbin0 = {LUT(AUCsrc0[07:01],b1),LUT(AUCsrc0[07:01],b0)}
LUTbin1 = {LUT(AUCsrc0[15:09],b1),LUT(AUCsrc0[15:09],b0)}
LUTbin2 = (LUT(AUCsrc0[23:17],b1),LUT(AUCsrc0[23:17],b0)}
LUTbin3 = {LUT(AUCsrc0[31:25],b1),LUT(AUCsrc0[31:25],b0)}

In command histbmin_4ub_4ub four separate unsigned bytes, specify four indices to LUT 101 organized as 256 bytes to be updated by four corresponding "update" values indicated by four separate unsigned bytes, such that LUT 101 entry receives the minimum value between its current value and the update operand value.

Pseudo-code for command histbmin_4ub4ub is:

LUT(AUCsrc0[07:00])=min[LUT(AUCsrc0[07:00]),AUCsrc2[07:00]]
LUT(AUCsrc0[15:08))=min[LUT(AUCsrc0[15:08]),AUCsrc2[15:08]]
LUT(AUCsrc0[23:16])= min[LUT(AUCsrc0[23:):16]),AUCsrc2[23:16]]
LUT(AUCsrc0[31:24])= min[LUT(AUCsrc0[31:24]),AUCsrc2[31:24]]

In the case that more than one index points to the same bin, the bin is preferably updated with the minimum of all the update values.

In command histbmax_4ub_4ub four separate unsigned bytes, specify four indices to LUT 101 organized as 256 bytes to be updated by four corresponding "update" values indicated by four separate unsigned bytes, such that LUT 101 entry receives the maximum value between its current value and the update operand.

Pseudo code for command histbmax_4ub_4ub is:

```
LUT(AUCsrc0[07:00])=max[LUT(AUCsrc0[07:00)),AUCsrc2[07:00]]
LUT(AUCsrc0[15:08])=max[LUT(AUCsrc0[15:08]),AUCsrc2[15:08]]
LUT(AUCsrc0[23:16])=max[LUT(AUCsrc0[23:16]),AUCsrc2[23:16]]
LUT(AUCsrcO[31:24])= max[LUT(AUCsrc0[31:24]),AUCsrc2[31:24]]
```

In the case that more than one index points to the same bin, the bin is preferably updated with the maximum of all the update values.

In command histbset_4ub_4ub four separate unsigned bytes, specify four indices to LUT 101 organized as 256 bytes to be set by four corresponding "update" values indicated by four separate unsigned bytes.

Pseudo-code for command histbset_4ub_4ub is:

```
LUT(AUCsrc0[07:00]) = AUCsrc2[07:00]
LUT(AUCsrcO[15:08]) = AUCsrc2[15:08]
LUT(AUCsrc0[23:16]) - AUCsrc2[23:16]
LUT(AUCsrc0[31:24]) = AUCsrc2[31:24]
```

In the case that more than one index points to the same bin, the bin is preferably set with the maximum update value given.

*Sliding Window Commands*

Sliding window commands provide for various manipulations of LUT 101. Each sliding window command provides for multiple, e.g. eight, locations to be updated simultaneously. Sliding window commands are performed in conjunction with "window size" control register 108 and internal register array "position register" 109. Window size register 108 stores a maximum value of any LUT 101 index stored in position register 109. When the window size register 108 is updated, the value stored therein correspondingly limits the LUT 101 index. A position update command (lutposld) takes the index values stored in one or more 8x8 input registers 105 and performs the modulo operation on each by the window size value stored in window size control register 108, storing the results in position register 109. The modulo operation (%) is equivalent to zeroing the most significant bits greater than the bits required to represent the window size. For example, for a window size of 32, bits 4:0 are maintained and bits 7:5 are zeroed.

Exemplary sliding window commands, according to different embodiments of the present invention are described as follows:

Upon command lutreadinc_8sb_8b eight separate bytes are read from LUT 101 as specified in position register 109. The indices of position register 109 are then incremented by the eight separate signed bytes modulo the value stored in window size register 108.

Pseudo-code for command lutreadinc_8sb_8b is:

```
AUCres0[07:00] = LUT(POS[07:00])
AUCres0[15:08] = LUT(POS[15:08])
AUCres0[23: 16] = LUT(POS[23:16])
AUCres0[31:24] = LUT(POS[31:24])
AUCres0[39:32] = LUT(POS[39:32])
AUCres0[47:40] = LUT(POS[47:40])
AUCres0[55:48] = LUT(POS[55:48])
AUCres0[63:56] = LUT(POS[63:56])
```

$$POS[07:00] = (POS[07:00] + AUCsrc0[07:00]) \ \% \ Crwinsize$$

$$POS[15:08] = (POS[15:081 + AUCsrc0[15:08]) \ \% \ Crwinsize$$

$$POS[23:16] = (POS[23:16] + AUCsrc0[23:161) \ \% \ Crwinsize$$

$$POS[31{:}24] = (POS[31{:}24] + AUCsrc0[31{:}24]) \ \% \ Crwinsize$$

$$POS[39{:}32] = (POS[39{:}32] + AUCsrc0[39{:}32]) \ \% \ Crwinsize$$

$$POS[47{:}40] = (POS[47{:}40] + AUCsrc0[47{:}40]) \ \% \ Crwinsize$$

$$POS[55{:}48] = (POS[55{:}48] + AUCsrc0[55{:}48]) \ \% \ Crwinsize$$

$$POS[63{:}56] = (POS[63{:}56] + AUCsrc0[63{:}56]) \ \% \ Crwinsize$$

Upon command lutreadposld_8ub_8b eight separate bytes are read from LUT 101 as specified in position register 109 which contains eight unique indices.

The eight indices of position register 109 are then set by the eight separate unsigned bytes modulo the value stored in window size register 108.

Pseudo-code for command lutreadposld_8ub_8b is:

```
AUCresO[07:00] = LUT(POS[07:00])
AUCres0[15:08] = LUT(POS[15:08])
AUCres0[23:16] = LUT(POS[23:16d])
AUCres0[31:24] = LUT(POS[31:24])
AUCres0[39:32] = LUT(POS[39:32])
AUCres0[47:40] = LUT(POS[47:40])
AUCres0[55:48] = LUT(POS[55:48])
AUCres0[63:56] = LUT(POS[63:56])
POS[07:00] = (AUCsrc0[07:00]) % Crwinsize
POS[15:08] = (AUCsrc0[15:08]) % Crwinsize
POS[23:16] = (AUCsrc0[23:16]) % Crwinsize
POS[31:24] = (AUCsrc0[31:24]) % Crwinsize
POS[39:32] = (AUCsrc0[39:32]) % Crwinsize
POS[47:40] = (AUCsrc0[47:40]) % Crwinsize
POS[55:48] = (AUCsrc0[55:48]) % Crwinsize
POS[63:56] = (AUCsrc0[63:56]) % Crwinsize
```

Upon command lutrwinc_8ub_lub_8b_8b eight separate bytes are read from LUT 101 as specified in position register 109 which contains eight unique indices. The eight indices of position register 109 are then incremented by the eight separate signed bytes modulo the value stored in window register 108. Eight separate bytes are written to LUT 101 as specified in one unsigned byte which is an initial index to be incremented to store the 8 bytes sequentially in LUT 101. The initial index must be 8 byte-aligned, and thus the hardware zeros the 3 least significant bits. The write operation is optionally performed in conjunction with write delay control register 111 which contains a value to be decremented upon receiving a write type command. The actual write indicated in the command will only be executed when the delay register value is zero (no decrement on register 111 will be performed following a successful write of the data). Pseudo-code for command lutrwinc_8ub_lub_8b_8b is:

```
AUCres0[07:00] = LUT(POS[07:00])
AUCres0[15:08] = LUT(POS[15:08])
AUCres0[23:16] = LUT(POS(23:16])
AUCres0[31:24] = LUT(POS[31:24])
AUCres0[39:32] = LUT(POS[39:32])
AUCres0[47:40] = LUT(POS[47:40])
AUCres0[55:48] = LUT(POS[55:48])
AUCres0[63:56] = LUT(POS[63:56])
```

$$POS[07:00] = (POS[07:00] + AUCsrc0[07:00]) \% \ Crwinsize$$

$$POS[15:08] = (POS[15:08] + AUCsrc0[15:08]) \% \ Crwinsize$$

$$POS[23:16] = (POS[23:16] + AUCsrc0[23:16]) \% \ Crwinsize$$

$$POS[31:24] = (POS[31:24] + AUCsrc0[31:24]) \% \ Crwinsize$$

$$POS[39:32] = (POS[39:32] + AUCsrc0[39:32]) \% \ Crwinsize$$

$$POS[47:40] = (POS[47:40] + AUCsrc0[47:40]) \% \ Crwinsize$$

$$POS[55:48] = (POS[55:48] + AUCsrc0[55:48]) \% \ Crwinsize$$

$$POS[63:56] = (POS[63:56] + AUCsrc0[63:56]) \% \ Crwinsize$$

```
LUT(AUCsrc1[07:03],000) = AUCsrc2[07:00]
LUT(AUCsrc1[07:03],001) = AUCsrc2[15:08]
LUT(AUCsrc1[07:03],010) = AUCsrc2[23:16]
LUT(AUCsrc1[07:03],011) = AUCsrc2[31:24]
LUT(AUCsrc1[07:03],100) = AUCsrc2[39:32]
LUT(AUCsrc1[07:03],101) = AUCsrc2[47:40]
LUT(AUCsrc1[07:03],110) = AUCsrc2[55:48]
LUT(AUCsrc1[07:03],111) = AUCsrc2[63:56]
```

Upon command lutrwposld_8sb_lub_Bb_8b eight separate bytes, are read from LUT 101 as specified in position register 109 which contains eight unique indices. The eight indices of position register 109 are then set by the eight separate unsigned bytes modulo the value stored in window register 108. Eight separate bytes are written to the LUT as specified in the one unsigned byte which is an initial index to be incremented to store the 8 bytes sequentially in LUT 101. The index is eight byte aligned, and thus processing circuitry 102 zeros the three least significant bits. The write operation is performed in conjunction with write delay control register 111 which contains a value to be decremented upon receiving any write type command. The actual write indicated in the command will only be executed when the delay register value is zero (no decrement on write delay control register 111 is performed following a successful write of the data.

Pseudo code for command 1ntrwpos1d_8sb_1ub_8b_8b is:

```
AUCres0[07:00] = LUT(POS[07:00])
AUCres0[15:08] = LUT(POS[15:08])
AUCres0[23:16] = LUT(POS[23:16])
AUCres0[31:24] = LUT(POS[31:24])
AUCres0[39:32] = LUT(POS[39:32])
AUCres0[47:40] = LUT(POS[47:40])
AUCres0[55:48] = LUT(POS[55:48])
AUCres0[63:56] = LUT(POS[63:56])
POS[07:00] = (AUCsrc0[07:00]) % Crwinsize
POS[15:08] = (AUCsrc0[15:08]) % Crwinsize
POS[23:16] = (AUCsrc0[23:16]) % Crwinsize
POS[31:24] = (AUcsrcO[31:24]) % Crwinsize
POS[39:32] = (AUCsrc0[39:32]) % Crwinsize
```

POS[47:40] = (AUCsrc0[47:40]) % Crwinsize
POS[55:48] = (AUCsrc0[55:48]) % Crwinsize
POS[63:56] = (AUCsrc0[63:56]) % Crwinsize
LUT(AUCsrc1[07:03],000) = AUCsrc2[07:00]
LUT(AUCsrc1[07:03],001) = AUCsrc2[15:08]
LUT(AUCsrc1[07:03],010) = AUCsrc2[23:16]
LUT(AUCsrc1[07:03],011) = AUCsrC2[33:24]
LUT(AUCsrc1[07:03],100) = AUCsrc2[39:32]
LUT(AUCsrc1[07:03],101) = AUCsrc2[47:40]
LUT(AUCsrc1[07:03],110) = AUCsrc2[55:48]
LUT(AUCsrc1[07:031,111) = AUCsrc2[63:56]

Upon command lutposld eight bytes of index data are loaded into 64 bit position register 109 (1 byte per position) whereby the values are the result of the input data bytes modulo the value stored in widow size control register 108. Processing circuitry 102 updates position register 109 as specified by the specific command. Pseudo code for command lutposld is:

PCS[07:00] = (AUCsrc0[07:00]) % Crwinsize
POS[15:08] = (AUCsrcO[15:08]) % Crwinsize
POS[23:16] = (AUCsrc0[23:16]) % Crwinsize
POS[31:24] = (AUCsrc0[31:24]) % Crwinsize
POS[39:32] = [AUCsrc0[39:32]) % Crwinsize
POS[47:40] = (AUCsrc0[47:40]) % Crwinsize
POS[55:48] = [AUCsrc0[55:48]) % Crwinsize
POS[63:56] = [AUCsrc0[63:56]) % Crwinsize

*Miscellaneous Commands*

The Reset command zeros output register 119 so that output appears zero until the next command which changes outputs is executed.

The Nop command is used as required in order to maintain values of the output register 119 valid until the next command which changes values of output register 119.

*Histogram - Data Forwarder*

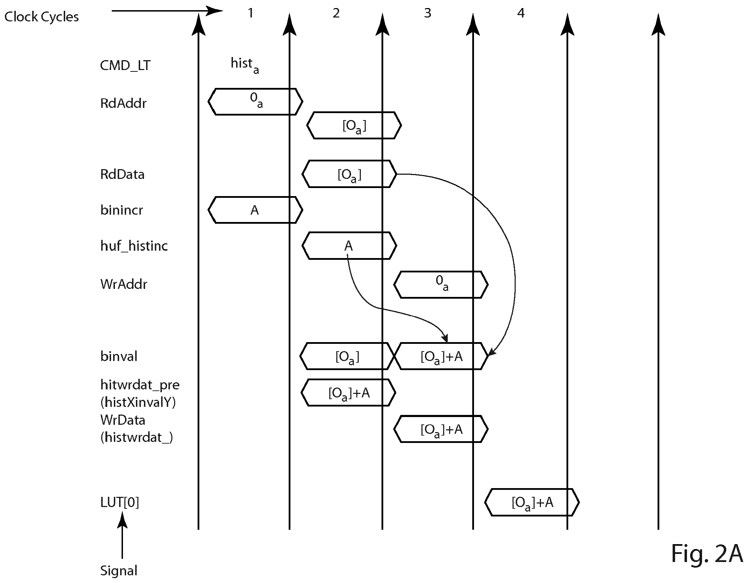

Reference is now made to Figure 2A which illustrates a simplified timing diagram of a histogram command for LUT 101, according to an embodiment of the present invention. Histogram circuitry typically requires a minimum of three clock cycles to complete one histogram increment command, e.g. histb_4ub_4ub. A histogram command, e.g. histb_4ub_4ub, is used to access address location 0 in order to increment the value stored in address location 0 by a value A. At clock cycle 1, address 0 and increment value A are input. At clock cycle 2, the value [0] stored in address 0 is available on rdData bus and added to the increment value (huf_histinc). At clock cycle 3, the new bin value (binval) calculated by adding the respective values in huf histinc and rdData is now ready on WrDat bus to be written to LUT 101.

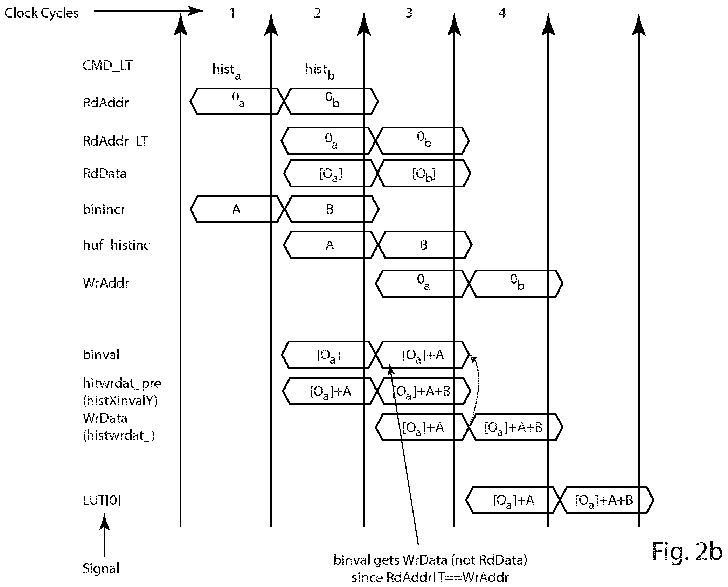

The data forwarding mechanism recognizes that a new command requires data from the previous command not yet available in the memory element or register, and consequently performs a "read" operation not from the memory cell which is not yet ready for reading but from another bus within the internal data pipe which has the valid datum. Reference is now made to Figure 2B which includes a simplified block diagram of two consecutive histogram commands $hist_a$ as in the timing diagram of Figure 2A and in addition a second histogram command $hist_b$ which is input into ELUT 10 on the next clock cycle, clock cycle 2. It is readily seen that the contents of location 0 now on the RdData bus in cycle 3 is not valid for use as it does not include the increment value A from command $hist_a$. Instead, according to an embodiment of the present invention, processing circuitry 102 realizes this condition and "forwards" the data calculated in the first hist command (wherein WrDat has $[0_a]$+A) and that is used as the "contents read" (i.e., binval) by the second hist command $hist_b$.

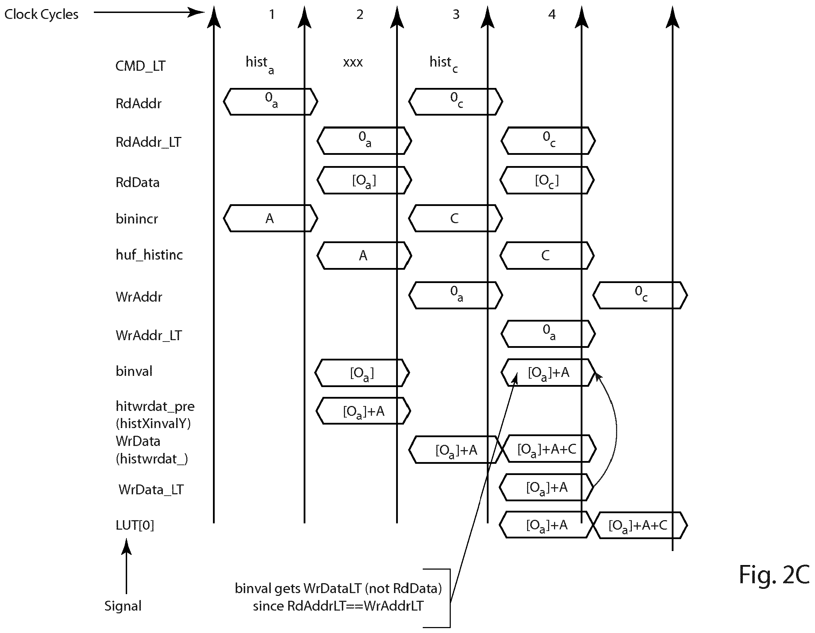

Reference is now made to Figure 2C , which illustrates a first histogram command $hist_a$ as in Figure 2A , followed by another command xxx during the second clock cycle followed by a third histogram command on the third clock cycle, $hist_c$.

As shown, the second histogram command ($hist_c$) must not use the contents of location 0 (marked $0_c$) now on the RdData bus since this does not account for the previous hist command ($hist_a$) which is still in progress. Instead, processing circuitry 102 recognizes this condition and "forwards" the data calculated in the first hist command (WrDat_LT

has $[0_n]$+A) and that is used as the "contents read" (i.e., binval) by the second hist command ($hist_c$). It should be noted that the timing the command sequence $hist_a$ -xxx- $hist_c$ as illustrated in Figure 2C is a different case then two consecutive hist commands $hist_a$ - $hist_b$ because in the timing of Figure 2C the data from the first hist command is one state further in the internal data pipeline (i.e., the $hist_a$ - $hist_b$ scenario used WrDat for data forwarding whereas the $hist_a$ -xxx- $hist_c$ scenario used WrDat_LT).

*Histogram Update Logic*

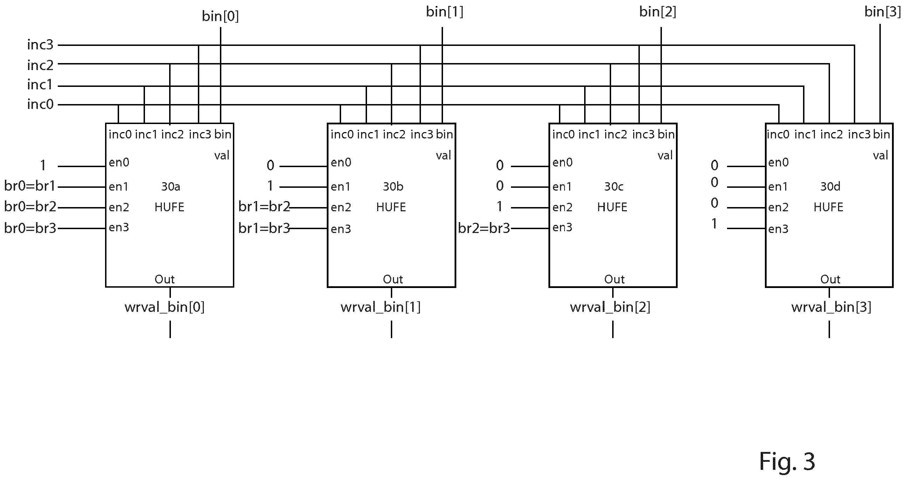

Reference is now made to Figure 3 , illustrating a simplified block diagram of a circuit of device 10, according to an embodiment of the present invention. In order to support the multiple histogram commands as described above, e.g. bin increment, minimum, maximum, and set, and further account for the possibility that a single instance of a histogram command may contain multiple references to a single bin, multiple generalized logic units 30a, 30b, 30c, and 30d or Histogram Update Function Elements (HUFE 30a-30d) such that each handles a single bin referenced by the single instance of a histogram command, e.g. four elements 30 for four bins as shown in Figure 3.

Each HUFE 30 has four inputs *inc0, inc1, inc2* and *inc3* which correspond to the four incremental values input in the histogram command for incrementing the four bin values, respectively. Each HUFE 30 has as an input a bin value input corresponding to the bin it is processing. HUGE 30 also four logical inputs *en0, en1, en2* and *en3* which indicate the address operands which are the same, if any are the same. Logical inputs *en0, en1, en2* and *en3* are preferably generated and output by logic circuitry 103. For HUFE 30a, *en0* is always enabled with a value '1', *en1* is enabled only when the bin0 and bin1 are the same address locations; *en2* is enabled only when bin0 and bin2 are the same address locations; *en3* is enabled only when bin0 and bin3 are the same address locations. For HUFE 30b, *en0* is always disabled with a value '0', *en1* is always enabled; *en2* is enabled only when bin1 and bin2 are the same address locations; *en3* is enabled only when bin1 and bin3 are the same address locations. For HUFE 30c, *eu0* and *en1* are always disabled with a value '0', *en2* is always enabled; *en3* is enabled only when bin2 and bin3 are the same address locations and for HUFE 30d, *en0, en1,* and *en2* are always disabled with a value '0', and *en3* is always enabled. Each HUFE 30 includes a respective output wrval_bin[0], wrval_bin[1], wrval_bin[2], wrval_bin[3] of an updated bin value. In the case where an out value is unneeded since the bin address was handled by a previous HUFE (e.g., bin0=bin3) so the bin output is unnecessary and the value is simply ignored by processing circuitry 102 responsible for writing the bin value to LUT 101.

Following the execution of the command the final value is "saturated" if necessary. That is, if the total sum of the inputs exceeded the 8b or 16b output width, then the output value is maxed to either xFF or xFFFF, respectively.

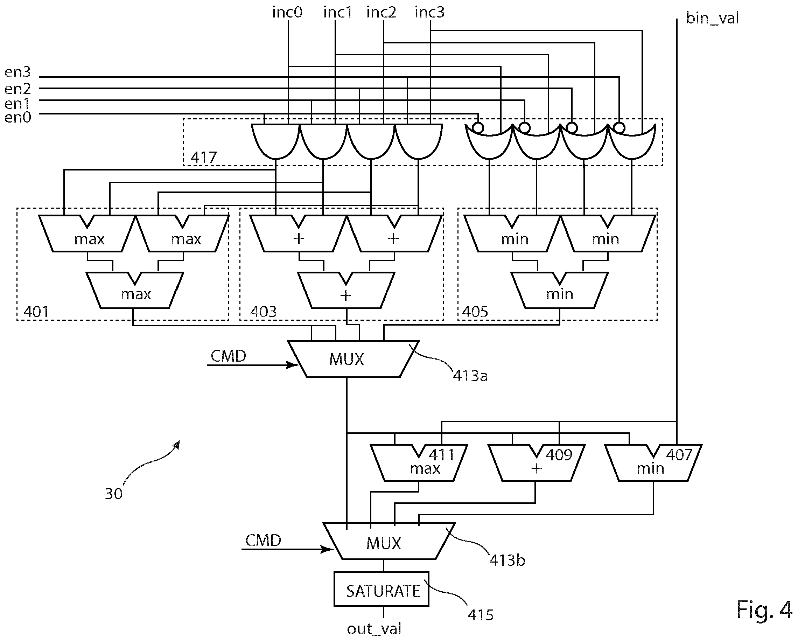

Reference is now made to Figure 4 , which is an exemplary block diagram of HUFE 30. HUFE 30 functions to perform histogram commands for any of four histogram commands, initializing a bin value, incrementing a bin value by an input value, finding a minimum between the current bin value and an input value or finding a maximum between the current bin value and an input value.

When none of the inputs bin addresses are the same, then each HUFE 30 instance operates independently on the input inc value. Thus for example HUFE 30d, will have only *en3* enabled and the input value *inc3* will then be handled as the lone input operand according to the input command. Thus, if the command is "max" the *inc3* input will be fed uninhibited through logic 417, 401, 403, 405, 413a and arriving at block 411 which calculates the maximum between its inputs *inc3* and *bin_val.* If the command was "inc" then block 409 adds input *inc3* and *bin_val*, and if the command was "min" then block 407 calculates the minimum between its inputs *inc3* and *bin_val.* For the "set" command *inc3* just passes through to multiplexer 413b. Depending on the command (e.g. set, increment, maximum or minimum) being used a control signal to multiplexer 413b selects the appropriate output to *out-val.*

Otherwise, when two or more address operands are the same, logic circuitry 103 generates enable signals *en0, en1, en2* and *en3* accordingly. Block 417 includes logic gates which route the input signals respectively to block 401 for performing a preliminary maximum calculation between any of inputs *inc0, inc1, inc2* and *inc3* for which the respective address operands are the same, similarly to block 405 for performing a preliminary minimum calculation, between any of inputs *inc0, inc1, inc2* and *inc3* for which the respective address operands are the same and to block 403 for addition of any of inputs *inc0, inc1, inc2* and *inc3* for which the respective address operands are the same. In the event that the total sum of the inputs exceeded the 8 bit or 16 bit output width, block 415 functions to saturate the output value to its maximum (xFF or xFFFF, respectively).

While the invention has been described with respect to a limited number of embodiments, it will be appreciated that many variations, modifications and other applications of the invention may be made within the scope defined by the claims. The disclosure herein also encompasses the following.

An electronic device implemented on a semiconductor chip, the electronic device, comprising:

(a) an array of addressable registers storing a plurality of data;
(b) a plurality of input registers operatively connected to said array, said input registers storing an input command parameter and a plurality of operands; wherein said operands include a plurality of address operands referencing at least one register of said array;

(c) processing circuitry which processes, based on said input command parameter said data; wherein a single instance of a command accesses said at least one register of said array, and based on said input command parameter said processing circuitry for all of said address operands: reads a datum of said data previously stored in said at least one register, updates said datum thereby producing an updated datum, and writes said updated datum into said at least one register;

(d) logic circuitry operatively attached between said input register and said processing circuitry, said logic circuitry providing a logical output signal to said processing circuitry indicating which if any of said address operands are identical thereby supporting at least two of said address operands being identical.

The processing circuitry optionally based on said logical output signal, processes any said identical address operands prior to writing said updated datum into said at least one register.

The electronic device may further comprise:

(e) a clock which provides a plurality of clock pulses, wherein said processing circuitry processes said command during at least three clock pulses, wherein a new instance of said command begins processing by said processing circuitry on a consecutive clock pulse so that there is a command throughput of at least one command per clock pulse.

Advantageously, said command sets a bin of a histogram by an incremental value.

Preferably, said command increments a bin of a histogram by an incremental value.

Optionally, said command compares said datum with at least one incremental value, said command calculates the minimal value selected from the group of said datum and said at least one incremental value and said command writes said minimal value as said updated datum.

Advantageously, said command compares said datum with at least one incremental value, said command calculates the maximal value selected from the group of said datum and said at least one incremental value and writes said maximal value as updated datum.

The electronic device may further comprise:

(e) a second array of registers operatively connected to said array;

wherein said registers of said second array store a plurality of locations referencing a portion of said array.

Optionally, said portion is contiguous further comprising

(f) an input control register operatively connected to said logic circuitry; wherein the size of said contiguous portion is specified by a size value stored in said input control register.

Advantageously, said command accesses a location solely within said contiguous portion of said array of addressable registers.

The electronic device may further comprise

(f) an input control register operatively connected to said logic circuitry, wherein a door-knock value is stored in said input control register, wherein upon initiating said command, said door-knock value is decremented and only upon said door-knock value equalling a previously defined minimum value is said updated datum written into said at least one register.

there is also disclosed an electronic device implemented on a semiconductor chip, the electronic device, comprising:

(a) a first array of addressable registers; and

(b) a plurality of input registers operatively connected to said array; said input registers storing an input command parameter; a plurality of operands, and a size value; and

(c) a second array of registers operatively connected to said first array; wherein said operands reference said second array of registers; wherein said registers of said second array store a plurality of address operands referencing a plurality of locations of said first array and wherein the accessible area of said addressable registers is specified by said size value.

Optionally, said address operands as stored respectively in said second array are calculated based on said input command parameter modulo said size value.

The electronic device may further comprise:

(d) processing circuitry which upon processing a single instance command based on said input command parameter processes a plurality of data stored in said locations.

Advantageously, a single instance of said command accesses at least one of said addressable registers of said accessible area, and based on said input command parameter, said command for said at least one addressable register and for all said address operands: reads a datum of said data previously stored in said at least one register, updates said datum thereby producing an updated datum, and writes said updated datum into said at least one register.

Optionally, the single instance of the command referencing the at least one register of the array supports at least two of said address operands being identical.

The electronic device may further comprise:
(e) a clock which provides a plurality of clock pulses, wherein said processing circuitry processes said command during at least three clock pulses, wherein a new instance of said command begins processing by said processing circuitry on consecutive clock pulses so that there is a command throughput of one command per clock pulse.

there is also disclosed an electronic device implemented on a semiconductor chip, the electronic device comprising:

(a) an array of addressable registers;
(b) a plurality of input registers operatively connected to said array, said input registers storing an input command parameter and a plurality of operands; wherein said operands include a plurality of address operands referencing at least one addressable register of said array; wherein said input command parameter specifies a command; wherein a single instance of said input command accesses the at least one register of the array;
(c) processing circuitry which executes the command thereby accessing for all said address operands at least one of said addressable registers of said array, and based on said input command parameter writes a datum into said at least one register; and
(d) a clock operatively attached to said processing circuitry provides a plurality of clock pulses, wherein the command throughput in number of commands processed per clock pulse is independent of the number of said address operands.

Advantageously, said command throughput is one command per clock pulse.

The electronic device may further comprise the step of
(e) an input control register operatively connected to said processing circuitry, wherein a door-knock value is stored in said input control register, and upon receiving said command, said door-knock value is decremented and only upon said door-knock value equalling a previously defined minimum value is said datum written into said at least one register.

The disclosure herein also encompasses the following.

An electronic look-up device (10) implemented on a semiconductor chip, the electronic look-up device, comprising:

(a) an array of addressable registers (101) storing a plurality of data;
(b) a plurality of input registers (105) operatively connected to said array, said input registers storing an input command parameter of a command and a plurality of operands of the command; characterized by said operands including a plurality of address operands referencing a plurality of registers of said array;
(c) processing circuitry (102) which processes, based on said input command parameter said data; wherein the command accesses said registers of said array, and based on said input command parameter said processing circuitry for all of said address operands: reads a datum of said data previously stored in said registers, updates said datum thereby producing an updated datum, and writes said updated datum into one of said registers; and
(d) logic circuitry (103) operatively attached between said input register and said processing circuitry, said logic circuitry providing a logical output signal to said processing circuitry indicating which if any of said address operands are identical thereby supporting at least two of said address operands being identical.

Advantageously, said processing circuitry based on said logical output signal, processes any said identical address operands prior to writing said updated datum into one of said registers.

The electronic look-up device may further comprise:
(e) a clock (113) which provides a plurality of clock pulses, wherein said processing circuitry processes said command during at least three clock pulses, wherein a new command begins processing by said processing circuitry on a consecutive clock pulse so that there is a command throughput of at least one command per clock pulse.

Optionally, said command sets a bin of a histogram by an incremental value.

Preferably, said command increments a bin of a histogram by an incremental value.

Advantageously, said command compares said datum with at least one incremental value, said command calculates the minimal value selected from the group of said datum and said at least one incremental value and said command writes said minimal value as said updated datum.

Optionally, said command compares said datum with at least one incremental value, said command calculates the maximal value selected from the group of said datum and said at least one incremental value and writes said maximal value as updated datum.

The electronic look-up device may further comprise:
(e) a second array of registers (109) operatively connected to said array; wherein said registers of said second array store a plurality of locations referencing a portion of said array.

Advantageously, said portion is contiguous further comprising
(f) an input control register (109) operatively connected to said logic circuitry; wherein the size of said contiguous portion is specified by a size value stored in said input control register.

Optionally, said command accesses a location solely within said contiguous portion of said array of addressable registers.

The electronic look up device may further comprise

(f) an input control register (109) operatively connected to said logic circuitry, wherein a door-knock value is stored in said input control register, wherein upon initiating said command, said door-knock value is decremented and only upon said door-knock value equalling a previously defined minimum value is said updated datum written into one of said addressable registers.

The electronic look up device may further comprise:

(e) a second array (109) of registers operatively connected to said first array; wherein said operands reference said second array of registers; wherein said registers of said second array store a plurality of address operands referencing a plurality of locations of said first array and characterized by the accessible area of said addressable registers (101) is specified by said size value.

Optionally, said address operands as stored respectively in said second array are calculated based on said input command parameter modulo said size value.

The electronic look up device may further comprise:

(f) processing circuitry (102) which upon processing a single instance of a command based on said input command parameter processes a plurality of data stored in said locations.

Optionally, a single instance of said command accesses a plurality of said addressable registers of said accessible area, and based on said input command parameter, said command for said at least one addressable register and for all said address operands: reads a datum of said data previously stored in said at least one register, updates said datum thereby producing an updated datum, and writes said updated datum into said at least one register.

## Claims

1. An electronic look-up device (10) implemented on a semiconductor chip, the electronic device comprising:

   multiple Histogram Update Function Elements (HUFEs) (30a, 30b, 30c, 30d), which are logic units configured to perform histogram commands for updating values of bins of a histogram, wherein each of these histogram commands has multiple bin address operands and corresponding multiple input operands, supports updating multiple bins simultaneously and supports two or more of the address operands being identical, wherein each HUFE handles a single bin referenced by a single instance of a histogram command;
   a logic circuitry (103) that is configured to determine when at least two bin address operands of a histogram command are the same; and send enable signals to the multiple HUFEs indicative of the determination;
   wherein each HUFE is configured to operate according to the histogram command and independently of the other HUFEs on an input value being provided over a single first input of the respective HUFE, when the enable signals indicate that none of the bin address operands are the same;
   and wherein, when the enable signals indicate that at least two bin address operands are the same, a first HUFE is configured to operate according to the histogram command on the at least two corresponding input values provided over at least two first inputs of the first HUFE, and an output of another HUFE for the bin address handled by the first HUFE is ignored.

2. The electronic look-up device (10) according to claim 1, wherein each HUFE (30a, 30b, 30c, 30d) comprises first inputs for receiving values and second inputs for receiving enable signals.

3. The electronic look-up device (10) according to claim 2, wherein for each HUFE (30a, 30b, 30c, 30d), a number of first inputs equals a number of second inputs and equals the number of the multiple HUFEs.

4. The electronic look-up device (10) according to claim 2, wherein the logic circuitry is configured to send to said first HUFE (30a) a first enable signal that is enabled and another enable signal that is enabled when the logic circuitry determines that two bin address operands are the same.

5. The electronic look-up device (10) according to claim 4, wherein the logic circuitry is configured to send to each other HUFE (30b, 30c, 30d) a first enable signal that is disabled.

6. The electronic look-up device (10) according to claim 1, wherein each HUFE (30a, 30b, 30c, 30d) is configured to perform a histogram command for any of four histogram commands: (a) initializing a bin value, (b) incrementing a bin value by an input value, (c) finding a minimum between the current bin value and an input value, and (d) finding a maximum between the current bin value and an input value.

7. The electronic look-up device (10) according to claim 1, wherein each HUFE (30a, 30b, 30c, 30d) comprises a first block (401) for performing a preliminary maximum calculation between any of values received over first inputs related to the same bin address operand.

8. The electronic look-up device (10) according to claim 1, wherein each HUFE (30a, 30b, 30c, 30d) comprises a second block (405) for performing a preliminary minimum calculation between any of values received over first inputs related to the same bin address operand.

9. The electronic look-up device (10) according to claim 1, wherein each HUFE (30a, 30b, 30c, 30d) comprises a third block (403) for adding any values received over first inputs related to the same bin address operand.

10. The electronic look-up device (10) according to claim 1, wherein each HUFE (30a, 30b, 30c, 30d) comprises:

    a) a first block (401) for performing a preliminary maximum calculation between any of values received over first inputs related to the same bin address operand;
    b) a second block (405) for performing a preliminary minimum calculation between any of values received over first inputs related to the same bin address operand; and
    c) a third block (403) for adding any values received over first inputs related to the same bin address operand.

11. The electronic look-up device (10) according to claim 10, wherein each HUFE (30a, 30b, 30c, 30d) comprises a first multiplexer (413a) for selecting, based on a histogram command, between outputs of the first block (401), the second block (405), and the third block (403).

12. The electronic look-up device (10) according to claim 11, wherein each HUFE (30a, 30b, 30c, 30d) comprises:

    a) a fourth block (411) for calculating a maximum between an output of the first multiplexer and a bin value of a bin associated with the HUFE;
    b) a fifth block (407) for calculating a minimum between the output of the first multiplexer and the bin value of the bin associated with the HUFE; and
    c) a sixth block (409) for adding the output of the first multiplexer and the bin value of the bin associated with the HUFE.

13. The electronic look-up device (10) according to claim 12, wherein each HUFE (30a, 30b, 30c, 30d) comprises a second multiplexer (413b) for selecting, based on the histogram command, between an output of the fourth block (411), fifth block (407), and the sixth block (409).

14. The electronic look-up device (10) according to claim 13, wherein each HUFE (30a, 30b, 30c, 30d) comprises a seventh block (415) for saturating an output of the second multiplexer to a maximum.

**Patentansprüche**

1. Elektronische Lookup-Vorrichtung (10), die auf einem Halbleiterchip implementiert ist, wobei die elektronische Vorrichtung umfasst:

    mehrere Histogramm-Aktualisierungsfunktionselemente (HUFEs) (30a, 30b, 30c, 30d), die Logikeinheiten sind, die dazu ausgelegt sind, Histogramm-Befehle zum Aktualisieren von Werten von Klassen eines Histogramms auszuführen, wobei jeder dieser Histogramm-Befehle mehrere Klassenadressoperanden und entsprechende Eingangsoperanden aufweist, das gleichzeitige Aktualisieren mehrerer Klassen unterstützt und unterstützt, dass zwei oder mehr der Adressoperanden identisch sind, wobei jedes HUFE eine einzelne Klasse handhabt, auf die durch eine einzelne Instanz eines Histogramm-Befehls Bezug genommen wird;
    eine Logikschaltung (103), die dazu ausgelegt ist, festzustellen, wann mindestens zwei Klassenadressoperanden eines Histogrammbefehls gleich sind, und Freigabesignale an die HUFEs zu senden, welche die Feststellung anzeigen;
    wobei jedes HUFE dazu ausgelegt ist, gemäß dem Histogramm-Befehl und unabhängig von den anderen HUFEs eine Operation auf einem Eingangswert auszuführen, der über einen einzelnen ersten Eingang des entsprechenden HUFE geliefert wird, wenn die Freigabesignale angeben, dass keine der Klassenadressoperanden gleich sind;

und wobei, wenn die Freigabesignale angeben, dass mindestens zwei Klassenadressoperanden gleich sind, ein erstes HUFE dazu ausgelegt ist, gemäß dem Histogramm-Befehl eine Operation auf den mindestens zwei entsprechenden Eingangswerten auszuführen, die über mindestens zwei erste Eingänge des ersten HUFE geliefert werden, und ein Ausgang eines anderen HUFE für die von dem ersten HUFE gehandhabte Klassenadresse ignoriert wird.

2. Elektronische Lookup-Vorrichtung (10) nach Anspruch 1, wobei jedes HUFE (30a, 30b, 30c, 30d) erste Eingänge zum Empfangen von Werten und zweite Eingänge zum Empfangen von Freigabesignalen umfasst.

3. Elektronische Lookup-Vorrichtung (10) nach Anspruch 2, wobei für jedes HUFE (30a, 30b, 30c, 30d) eine Anzahl von ersten Eingängen gleich einer Anzahl von zweiten Eingängen und gleich der Anzahl der HUFEs ist.

4. Elektronische Lookup-Vorrichtung (10) nach Anspruch 2, wobei die Logikschaltung dazu ausgelegt ist, ein erstes Freigabesignal, das freigegeben ist, und ein weiteres Freigabesignal, das freigegeben ist, an das erste HUFE (30a) zu senden, wenn die Logikschaltung bestimmt, dass zwei Klasseadressoperanden gleich sind.

5. Elektronische Lookup-Vorrichtung (10) nach Anspruch 4, wobei die Logikschaltung dazu ausgelegt ist, an jedes andere HUFE (30b, 30c, 30d) ein erstes Freigabesignal zu senden, das deaktiviert ist.

6. Elektronische Lookup-Vorrichtung (10) nach Anspruch 1, wobei jedes HUFE (30a, 30b, 30c, 30d) dazu ausgelegt ist, einen Histogramm-Befehl für einen beliebigen von vier Histogramm-Befehlen auszuführen: (a) Initialisieren eines Klassenwertes, (b) Inkrementieren eines Klassenwerts um einen Eingangswert, (c) Finden eines Minimums zwischen dem aktuellen Klassenwert und einem Eingangswert und (d) Finden eines Maximums zwischen dem aktuellen Klassenwert und einem Eingangswert.

7. Elektronische Lookup-Vorrichtung (10) nach Anspruch 1, wobei jedes HUFE (30a, 30b, 30c, 30d) einen ersten Block (401) umfasst, um eine vorläufige Maximum-Berechnung zwischen beliebigen Werten durchzuführen, die über erste Eingänge empfangen werden, die sich auf denselben Klassenwertoperanden beziehen.

8. Elektronische Lookup-Vorrichtung (10) nach Anspruch 1, wobei jedes HUFE (30a, 30b, 30c, 30d) einen zweiten Block (405) umfasst, um eine vorläufige Minimum-Berechnung zwischen beliebigen Werten durchzuführen, die über erste Eingänge empfangen werden, die sich auf denselben Klassenwertoperanden beziehen.

9. Elektronische Lookup-Vorrichtung (10) nach Anspruch 1, wobei jedes HUFE (30a, 30b, 30c, 30d) einen dritten Block (403) zum Addieren beliebiger über erste Eingänge empfangener Werte umfasst, die sich auf denselben Klassenadressoperanden beziehen.

10. Elektronische Lookup-Vorrichtung (10) nach Anspruch 1, wobei jedes HUFE (30a, 30b, 30c, 30d) umfasst:

a) einen ersten Block (401) zum Durchführen einer vorläufigen Maximum-Berechnung zwischen beliebigen Werten, die über erste Eingänge empfangen werden, die sich auf denselben Klassenadressoperanden beziehen;
b) einen zweiten Block (405) zum Durchführen einer vorläufigen Minimum-Berechnung zwischen beliebigen Werten, welche über erste Eingänge empfangen werden, die sich auf denselben Klassenadressoperanden beziehen; und
c) einen dritten Block (403) zum Addieren beliebiger Werte, welche über erste Eingänge empfangen werden, die sich auf denselben Klassenadressoperanden beziehen.

11. Elektronische Lookup-Vorrichtung (10) nach Anspruch 10, wobei jedes HUFE (30a, 30b, 30c, 30d) einen ersten Multiplexer (413a) umfasst, um basierend auf einem Histogramm-Befehl zwischen Ausgaben des ersten Blocks (401), des zweiten Blocks (405) und des dritten Blocks (403) auszuwählen.

12. Elektronische Lookup-Vorrichtung (10) nach Anspruch 11, wobei jedes HUFE (30a, 30b, 30c, 30d) umfasst:

a) einen vierten Block (411) zum Berechnen eines Maximums zwischen einem Ausgang des ersten Multiplexers und einem Klassenwert einer dem HUFE zugeordneten Klasse;

b) einen fünften Block (407) zum Berechnen eines Minimums zwischen dem Ausgang des ersten Multiplexers und einem Klassenwert der dem HUFE zugeordneten Klasse; und

c) einen sechste Block (409) zum Addieren des Ausgangs des ersten Multiplexers und des Klassenwertes der dem HUFE zugeordneten Klasse.

13. Elektronische Lookup-Vorrichtung (10) nach Anspruch 12, wobei jedes HUFE (30a, 30b, 30c, 30d) einen zweiten Multiplexer (413b) umfasst, um basierend auf dem Histogramm-Befehl zwischen Ausgaben des vierten Blocks (411), des fünften Blocks (407) und des sechsten Blocks (409) auszuwählen.

14. Elektronische Lookup-Vorrichtung (10) nach Anspruch 13, wobei jedes HUFE (30a, 30b, 30c, 30d) einen siebten Block (415) zum Sättigen eines Ausgangs des zweiten Multiplexers auf ein Maximum umfasst.

**Revendications**

1. Dispositif de conversion électronique (10) mis en œuvre sur une puce à semiconducteur, le dispositif électronique comprenant :

de multiples éléments de fonction de mise à jour d'histogramme (HUFEs) (30a, 30b, 30c, 30d), qui sont des unités logiques configurées pour réaliser des commandes d'histogramme pour mettre à jour des valeurs de compartiments d'un histogramme, dans lequel chacune de ces commandes d'histogramme a de multiples opérandes d'adresse de compartiment et de multiples opérandes d'entrée correspondants, prend en charge la mise à jour de multiples compartiments simultanément et prend en charge deux, ou plus, des opérandes d'adresse qui sont identiques, dans lequel chaque HUFE traite un seul compartiment référencé par un seul cas d'une commande d'histogramme ;

une circuiterie logique (103) qui est configurée pour déterminer l'instant auquel au moins deux opérandes d'adresse de compartiment d'une commande d'histogramme sont les mêmes ; et envoyer des signaux d'activation aux multiples HUFEs indicatifs de la détermination ;

dans lequel chaque HUFE est configuré pour opérer selon la commande d'histogramme et indépendamment des autres HUFEs sur une valeur d'entrée fournie par l'intermédiaire d'une seule première entrée de l'HUFE respectif, lorsque les signaux d'activation indiquant qu'aucun des opérandes d'adresse de compartiment ne sont les mêmes ;

et dans lequel, lorsque les signaux d'activation indiquent qu'au moins deux opérandes d'adresse de compartiment sont les mêmes, un premier HUFE est configuré pour opérer selon la commande d'histogramme sur les au moins deux valeurs d'entrée correspondantes fournies par l'intermédiaire d'au moins deux premières entrées du premier HUFE, et une sortie d'un autre HUFE pour l'adresse de compartiment traitée par le premier HUFE est ignorée.

2. Dispositif de conversion électronique (10) selon la revendication 1, dans lequel chaque HUFE (30a, 30b, 30c, 30d) comprend des premières entrées pour recevoir des valeurs et des secondes entrées pour recevoir des signaux d'activation.

3. Dispositif de conversion électronique (10) selon la revendication 2, dans lequel, pour chaque HUFE (30a, 30b, 30c, 30d), un nombre de premières entrées est égal à un nombre de secondes entrées et est égal au nombre des multiples HUFEs.

4. Dispositif de conversion électronique (10) selon la revendication 2, dans lequel la circuiterie logique est configurée pour envoyer, audit premier HUFE (30a), un premier signal d'activation qui est activé et un autre signal d'activation qui est activé lorsque la circuiterie logique détermine que deux opérandes d'adresse de compartiment sont les mêmes.

5. Dispositif de conversion électronique (10) selon la revendication 4, dans lequel la circuiterie logique est configurée pour envoyer, à chaque autre HUFE (30b, 30c, 30d), un premier signal d'activation qui est désactivé.

6. Dispositif de conversion électronique (10) selon la revendication 1, dans lequel chaque HUFE (30a, 30b, 30c, 30d) est configuré pour réaliser une commande d'histogramme pour l'une quelconque de quatre commandes d'histogramme : (a) l'initialisation d'une valeur de compartiment, (b) l'incrémentation d'une valeur de compartiment selon une valeur d'entrée, (c) la découverte d'un minimum entre la valeur de compartiment actuelle et une valeur d'entrée, et (d) la découverte d'un maximum entre la valeur de compartiment actuelle et une valeur d'entrée.

7. Dispositif de conversion électronique (10) selon la revendication 1, dans lequel chaque HUFE (30a, 30b, 30c, 30d) comprend un premier bloc (401) pour réaliser un calcul de maximum préliminaire entre l'une quelconque de valeurs reçues par l'intermédiaire de premières entrées connexes au même opérande d'adresse de compartiment.

8. Dispositif de conversion électronique (10) selon la revendication 1, dans lequel chaque HUFE (30a, 30b, 30c, 30d) comprend un deuxième bloc (405) pour réaliser un calcul de minimum préliminaire entre l'une quelconque de valeurs reçues par l'intermédiaire de premières entrées connexes au même opérande d'adresse de compartiment.

9. Dispositif de conversion électronique (10) selon la revendication 1, dans lequel chaque HUFE (30a, 30b, 30c, 30d) comprend un troisième bloc (403) pour additionner de quelconques valeurs reçues par l'intermédiaire de premières entrées connexes au même opérande d'adresse de compartiment.

10. Dispositif de conversion électronique (10) selon la revendication 1, dans lequel chaque HUFE (30a, 30b, 30c, 30d) comprend :

   a) un premier bloc (401) pour réaliser un calcul de maximum préliminaire entre l'une quelconque de valeurs reçues par l'intermédiaire de premières entrées connexes au même opérande d'adresse de compartiment ;
   b) un deuxième bloc (405) pour réaliser un calcul de minimum préliminaire entre l'une quelconque de valeurs reçues par l'intermédiaire de premières entrées connexes au même opérande d'adresse de compartiment ; et
   c) un troisième bloc (403) pour additionner de quelconques valeurs reçues par l'intermédiaire de premières entrées connexes au même opérande d'adresse de compartiment.

11. Dispositif de conversion électronique (10) selon la revendication 10, dans lequel chaque HUFE (30a, 30b, 30c, 30d) comprend un premier multiplexeur (413a) pour sélectionner, sur la base d'une commande d'histogramme, entre des sorties du premier bloc (401), du deuxième bloc (405), et du troisième bloc (403).

12. Dispositif de conversion électronique (10) selon la revendication 11, dans lequel chaque HUFE (30a, 30b, 30c, 30d) comprend :

   a) un quatrième bloc (411) pour le calcul d'un maximum entre une sortie du premier multiplexeur et d'une valeur de compartiment d'un compartiment associé au HUFE ;
   b) un cinquième bloc (407) pour le calcul d'un minimum entre la sortie du premier multiplexeur et la valeur de compartiment du compartiment associé au HUFE ; et
   c) un sixième bloc (409) pour additionner la sortie du premier multiplexeur et la valeur de compartiment du compartiment associé au HUFE.

13. Dispositif de conversion électronique (10) selon la revendication 12, dans lequel chaque HUFE (30a, 30b, 30c, 30d) comprend un second multiplexeur (413b) pour sélectionner, sur la base de la commande d'histogramme, entre une sortie du quatrième bloc (411), du cinquième bloc (407), et du sixième bloc (409).

14. Dispositif de conversion électronique (10) selon la revendication 13, dans lequel chaque HUFE (30a, 30b, 30c, 30d) comprend un septième bloc (415) pour saturer une sortie du second multiplexeur à un maximum.

Fig. 1

10

AUCsrc0
104C
105C 8x8 input register

AUCsrc1 104B
105B 8x8 input register

AUCsrc2 104B
104A AUCsrc2
105A 8x8 input register

103 Logic Circuitry
102 Processing Circuitry
101 Addressable Registers

119 Output bus

106B
AUCres0
AUCres1
106A

111 Write Delay
112 Hist Delay
108 Window Size
107 Control Registers

109 Pos Register

115

113 Clock

117 Load Store Bus

121 Command Bus

Fig. 2A

Fig. 2b

EP 3 537 289 B1

Clock Cycles → | 1 | 2 | 3 | 4 |

CMD_LT: $hist_a$ | xxx | $hist_c$

RdAddr: $0_a$ | $0_c$

RdAddr_LT: $0_a$ | $0_c$

RdData: $[O_a]$ | $[O_c]$

binincr: A | C

huf_histinc: A | C

WrAddr: $0_a$ | $0_c$

WrAddr_LT: $0_a$

binval: $[O_a]$ | $[O_a]+A$

hitwrdat_pre (histXinvalY): $[O_a]+A$

WrData (histwrdat_): $[O_a]+A$ | $[O_a]+A+C$

WrData_LT: $[O_a]+A$

LUT[0]: $[O_a]+A$ | $[O_a]+A+C$

Signal

binval gets WrDataLT (not RdData) since RdAddrLT==WrAddrLT

Fig. 2C

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6446198 B
- WO 2005017765 A2
- US 20030046559 A1